(19) Europäisches Patentamt / European Patent Office / Office européen des brevets

(11) **EP 3 300 325 B1**

(12) **FASCICULE DE BREVET EUROPEEN**

(45) Date de publication et mention
de la délivrance du brevet:
**01.05.2019 Bulletin 2019/18**

(51) Int Cl.:
**H04L 27/26** (2006.01)    **H04L 25/03** (2006.01)
**H04L 27/36** (2006.01)

(21) Numéro de dépôt: **17191727.1**

(22) Date de dépôt: **19.09.2017**

(54) **ÉMETTEUR OFDM À FILTRAGE PAR BLOCS ET SYSTÈME D'ÉMISSION/RÉCEPTION CORRESPONDANT**

OFDM-SENDER MIT BLOCKWEISER FILTERUNG, UND ENTSPRECHENDES SENDE-/EMPFANGSSYSTEM

OFDM TRANSMITTER WITH BLOCK FILTERING AND CORRESPONDING TRANSCEIVER SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2016 FR 1658866**

(43) Date de publication de la demande:
**28.03.2018 Bulletin 2018/13**

(73) Titulaire: **Commissariat à l'Energie Atomique et aux Energies Alternatives**
**75015 Paris (FR)**

(72) Inventeur: **DORE, Jean-Baptiste**
**38120 Fontanil-Cornillon (FR)**

(74) Mandataire: **Brevalex**
**56, Boulevard de l'Embouchure**
**B.P. 27519**
**31075 Toulouse Cedex 2 (FR)**

(56) Documents cités:
- ROSTOM ZAKARIA ET AL: "A Novel Filter-Bank Multicarrier Scheme to Mitigate the Intrinsic Interference: Application to MIMO Systems", IEEE TRANSACTIONS ON WIRELESS COMMUNICATIONS, IEEE SERVICE CENTER, PISCATAWAY, NJ, US, vol. 11, no. 3, 1 mars 2012 (2012-03-01), pages 1112-1123, XP011433115, ISSN: 1536-1276, DOI: 10.1109/TWC.2012.012412.110607
- WANG XIAOJIE ET AL: "Pilot-Aided Channel Estimation for Universal Filtered Multi-Carrier", 2015 IEEE 82ND VEHICULAR TECHNOLOGY CONFERENCE (VTC2015-FALL), IEEE, 6 septembre 2015 (2015-09-06), pages 1-5, XP032857251, DOI: 10.1109/VTCFALL.2015.7391089
- Xiaojie Wang ET AL: "Universal Filtered Multi-Carrier with Leakage-Based Filter Optimization", , 16 mai 2014 (2014-05-16), XP055316707, Extrait de l'Internet: URL:http://ieeexplore.ieee.org/ielx7/68430 47/6843048/06843082.pdf?tp=&arnumber=68430 82&isnumber=6843048 [extrait le 2016-11-04]

**Description**

**DOMAINE TECHNIQUE**

La présente invention concerne de manière générale le domaine des systèmes de télécommunication OFDM (*Orthogonal Frequency Division Multiplexing*) ainsi que celui des systèmes de télécommunication utilisant une modulation multi-porteuse à banc de filtres, encore dénommés systèmes FBMC (*Filter Bank Multi-Carrier*).

**ÉTAT DE LA TECHNIQUE ANTÉRIEURE**

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (*Orthogonal Frequency Division Multiplexing*). Celle-ci est mise en oeuvre dans les réseaux locaux sans fil WLAN, WiFi, dans l'accès internet sans fil à haut débit (WiMAX), les systèmes de radiodiffusion numérique (DVB-T, ISDB-T, DAB), les liaisons numériques asymétriques (xDSL), les réseaux cellulaires (LTE), etc.

Dans un système de transmission OFDM, chaque bloc de symboles OFDM est précédé d'un intervalle de garde ou bien d'un préfixe cyclique, de longueur supérieure à l'étalement temporel de la réponse impulsionnelle du canal, de manière à éliminer l'interférence intersymbole. L'insertion d'un intervalle de garde ou d'un préfixe conduit toutefois à une perte d'efficacité spectrale. Enfin, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande.

Plus récemment, une modulation multi-porteuse par banc de filtres ou FBMC (*Filter Bank Multi Carrier*) a été proposée comme alternative à la modulation OFDM.

Le principe de la modulation FBMC est basé sur une synthèse par banc de filtres à l'émission et une analyse par banc de filtres à la réception. Les filtres à l'émission et à la réception sont des versions décalées en fréquence et en temps d'un filtre prototype.

On trouvera une introduction à la modulation FBMC dans l'article de B. Hirosaki intitulé « An orthogonally multiplexed QAM system using the discrete Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002.

Un système d'émission/réception FBMC est susceptible de représentation dans le domaine temporel ou, de manière duale, dans le domaine fréquentiel. On trouvera une description de ces deux représentations dans la demande publiée sous la référence FR-A-3013928 déposée au nom de la présente demanderesse.

De manière générale, si l'on note $a_{k,n}$ les symboles réels à transmettre (plus précisément les parties réelles et imaginaires des symboles QAM à transmettre), où $k$ est l'indice de la sous-porteuse et $n$ est l'indice du bloc de symboles, le signal émis par l'émetteur FBMC peut s'écrire sous la forme :

$$s(m) = \sum_{k=0}^{M-1} \sum_{n \in \mathbf{Z}} a_{k,n} \tilde{g}_{k,n}(m) \qquad (1)$$

où

$$\tilde{g}_{k,n}(m) = g_{k,n}(m) e^{j\phi_{k,n}} = g\left(m - nM/2\right) e^{j\frac{2\pi}{M}k(m-D/2)} e^{j\phi_{k,n}} \qquad (2)$$

$g_{k,n}(m)$ est une version décalée en temps et en fréquence de la réponse du filtre prototype, $g(m)$ est la réponse du filtre prototype, $M$ est le nombre (pair, de préférence puissance de 2) de sous-porteuses, $D = KM$-1 où $K$ est le facteur de recouvrement des filtres de synthèse, ou de manière équivalente la durée de réponse impulsionnelle du filtre prototype.

$$\phi_{k,n} = \frac{\pi}{2}\left(n + k\right) - \pi nk$$

Le facteur $e^{j\phi_{k,n}}$ avec est un terme de phase représentant la modulation OQAM, $n$ est un indice temporel.

L'ensemble des $g_{k,n}(m)$, $k = 0,...,M$-1 représente la réponse du filtre transmultiplexeur. L'ensemble des $\tilde{g}_{k,n}(m)$, $k = 0,...,M$-1 représente cette même réponse à ceci près que ses éléments sont pondérés en temps et en fréquence par les termes de phase $e^{j\phi_{k,n}}$.

En supposant le canal plat et sans délai, la réponse du filtre transmultiplexeur du récepteur correspondant à une excitation unitaire du couple instant-fréquence $(n_0,k_0)$ où $n_0$ est l'indice d'un instant et $k_0$ est l'indice d'une sous-porteuse est donnée par :

$$r_{k',n'} = \sum_{m=-\infty}^{+\infty} \tilde{g}_{k_0,n_0}(m)\tilde{g}_{k',n'}^{*}$$

$$= e^{j\pi(k_0+\delta k)\delta n} e^{-j\frac{\pi}{2}(\delta k+\delta n)} \sum_{m=-\infty}^{+\infty} g(m)g(m-\delta n.M/2)e^{j\frac{2\pi}{M}\delta k\left(\frac{D}{2}-m\right)} \qquad (3)$$

avec $\delta n = n'$-$n_0$ et $\delta k = k'$-$k_0$. Le filtre prototype est choisi de manière à ce que sa réponse impulsionnelle $g(m)$, $m \in \mathbf{Z}$ satisfasse à la condition d'orthogonalité réelle :

$$\Re e\left( \sum_{m=-\infty}^{+\infty} \tilde{g}_{k',n'}(m)\tilde{g}_{k,n}^{*}(m) \right) = \delta_{k,k'}.\delta_{n,n'} \qquad (4)$$

où $\Re e$ est la partie réelle et $\delta$ est le symbole de Kronecker. On comprend de l'expression (4) que l'interférence affectant le symbole réel $a_{k,n}$ peut être éliminée dans la mesure où celle-ci est purement imaginaire. Plus précisément, l'interférence intrinsèque, $I_{k',n'}$, c'est-à-dire l'interférence due aux symboles avoisinants $a_{k,n}$, $(k,n) \in \Omega_{k',n'}$ où $\Omega_{k',n'}$ est le support temps-fréquence de la réponse du filtre transmultiplexeur centrée sur le symbole $a_{k',n'}$, peut être exprimée par :

$$I_{k',n'} = \sum_{(k,n)\in\Omega_{k',n'}} a_{k,n} \sum_{m=-\infty}^{+\infty} \tilde{g}_{k,n}(m)\tilde{g}_{k',n'}^{*}(m) \qquad (5)$$

Ce terme est purement imaginaire en raison de la modulation OQAM, autrement dit de l'alternance des valeurs réelles et des valeurs imaginaires due au terme de phase $e^{j\phi_{k,n}}$ dans l'expression (2).

Toutefois, l'utilisation de la modulation OQAM, assurant, comme on l'a vu, l'orthogonalité réelle à la réception, présente un certain nombre d'inconvénients. En effet, l'utilisation de pilotes pour l'estimation du canal est sensiblement plus compliquée qu'en OFDM. De même, les techniques de codage spatio-temporel STBC (*Space Time Block Code*) pour systèmes MIMO (Multiple Input Multiple Output) ne sont pas applicables car les coefficients complexes du code détruisent la propriété d'orthogonalité réelle.

Afin de s'abstraire de la contrainte de valeur réelle pesant sur les symboles de modulation $(a_{k,n})$, une variante de la modulation FBMC, dénommée FFT-FBMC a été proposée dans l'article de R. Zakaria et al. intitulé « A novel filter-bank multicarrier scheme to mitigate the intrinsic interference : application to MIMO systems », publié dans IEEE Trans. on Wireless Communications, vol. 11, No. 3, Mars 2012, pp. 1112-1123. Cette variante consiste à éliminer l'interférence intrinsèque en présence de symboles de modulation complexes en séparant temporellement différents blocs de symboles au moyen d'une IFFT suivie de l'adjonction d'un préfixe cyclique, comme dans une modulation OFDM classique, en amont de la modulation FBMC.

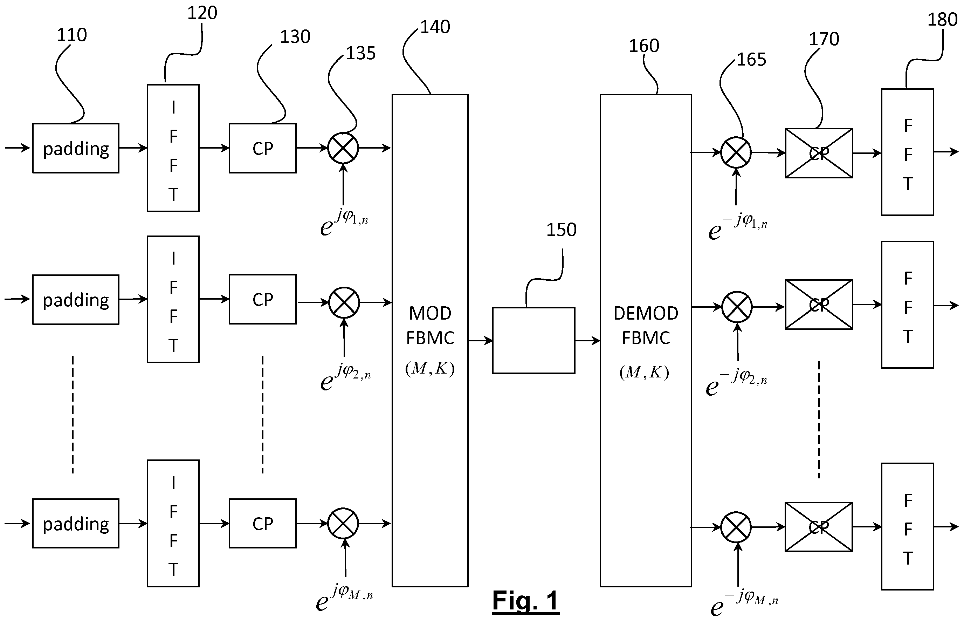

Plus précisément, la Fig. 1 illustre de manière schématique un système de modulation FFT-FBMC selon l'état de la technique.

Les $MN/2$ symboles de modulation (complexes), $d_{k,n}$, à transmettre sont regroupés sous la forme de $M$ blocs de taille $N/2$, où $M$ est comme précédemment le nombre de sous-porteuses FBMC et $N$ est le nombre de sous-porteuses du multiplex OFDM utilisé. Dans la suite de la description, pour éviter toute confusion, nous réserverons le terme de sous-porteuse aux sous-porteuses du multiplex OFDM et utiliserons le terme de porteuse pour les sous-porteuses de la modulation FBMC.

Chaque bloc de $N/2$ symboles de modulation est alternativement complété par $N/2$ zéros de bourrage en début ou en fin de bloc (*zero padding*) en 110 de manière à générer $M$ blocs de taille $N$. Chacun de ces $M$ blocs ainsi complétés subit une IFFT de taille $N$ en 120 pour générer $N$ séquences temporelles. Un préfixe cyclique de longueur $L$ est inséré en tête de chacune de ces séquences en 130. Plus précisément, les $L$ derniers échantillons de la séquence sont insérés en tête de la séquence, de manière connue en soi. Pour supprimer l'interférence entre les symboles OFDM, la longueur $L$ du préfixe est choisie telle que $L \geq 2\Delta$ où $\Delta = 2K$-1, autrement dit la longueur du préfixe est choisie supérieure à l'étalement temporel de la réponse du transmultiplexeur.

Les symboles (complexes) $a_{k,n}$ de ces séquences sont respectivement multipliés par les termes de phase $e^{j\phi_{k,n}}$ (modulation OQAM) en 135. Les symboles ainsi modulés, $a_{k,n}e^{j\phi_{k,n}}$ sont ensuite fournis aux $M$ voies d'entrée (correspondant aux $M$ porteuses) d'un modulateur FBMC conventionnel, 140.

Après transmission sur le canal 150, le signal reçu est démodulé par un démodulateur FBMC conventionnel, 160. Les $M$ voies de sortie (correspondant aux $M$ porteuses) fournissent chacune une séquence d'échantillons. Les échantillons de ces séquences font l'objet d'une multiplication par les termes de phase $e^{-j\phi}_{k,n}$ (démodulation OQAM) dans les multiplicateurs 165.

Après démodulation OQAM, les $L$ premiers échantillons correspondant au préfixe sont supprimés en 170. Chacune des séquences est ensuite soumise à une FFT de taille $N$ en 180 et les symboles de modulation sont ensuite estimés sur les fréquences actives (autrement dit les fréquences n'ayant pas fait l'objet de bourrage par des zéros).

Le système FFT-FBMC de la Fig. 1 est très intéressant dans la mesure où il permet effectivement de s'affranchir du caractère réel des symboles de modulation tout en éliminant l'interférence intrinsèque.

Toutefois, ce système présente deux inconvénients importants. Tout d'abord, les sous-porteuses reçues ne présentent pas toutes la même amplitude. Il en résulte que certaines sont plus affectées que d'autres par le bruit et que le processus d'estimation de canal doit tenir compte de cette variation d'amplitude. Ensuite, la structure du récepteur est complexe, notamment en raison de la batterie de filtres d'analyse en réception, ce qui rend son implémentation dans un terminal mobile délicate.

Le but de la présente invention est par conséquent de proposer une variante de système d'émission/réception FBMC qui s'affranchisse du caractère réel des symboles de modulation tout en remédiant aux inconvénients précités. Plus spécifiquement, un objectif de la présente invention est de proposer un tel système FBMC comportant un récepteur de structure particulièrement simple et ne nécessitant pas de mesures complexes de débruitage et d'estimation de canal.

## EXPOSÉ DE L'INVENTION

La présente invention est définie par un émetteur destiné à transmettre une trame de symboles de modulation complexes représentée sous la forme d'une matrice (**D**) de taille $(NM / 2)\times P$ de symboles de modulation où $P$ est la longueur de la trame, $M$ est un nombre pair de porteuses d'un modulateur FBMC et $N$ est un nombre de sous-porteuses d'un multiplex OFDM, chaque colonne de la matrice étant segmentée par un module de segmentation en $M$ vecteurs de taille $N / 2$, chacun desdits vecteurs étant complété de part et d'autre par $N / 2$ éléments nuls pour former un vecteur complété de taille $N$, chaque vecteur complété faisant l'objet d'une transformation dans un module IFFT de taille $N$ pour fournir une séquence temporelle à laquelle sont concaténés un préfixe cyclique et un suffixe cyclique, la séquence temporelle cyclique ainsi obtenue étant fournie à une voie d'entrée du modulateur FBMC, ledit émetteur étant configuré de sorte que les symboles de modulation de la trame subissent une pré-compensation en phase dans un premier module de compensation et une pré-compensation en amplitude dans un second module de compensation avant d'être fournis au module de segmentation, la pré-compensation en phase et en amplitude étant adaptée à compenser les rotations de phase et l'atténuation subies par chaque échantillon de chacune des séquences cycliques au sein du modulateur FBMC.

Selon un premier mode de réalisation, après concaténation avec un préfixe cyclique et un suffixe cyclique, la séquence temporelle cyclique ainsi obtenue est modulée selon une modulation OQAM par multiplication par un facteur de phase avant d'être fournie à une voie d'entrée du modulateur FBMC.

Dans ce cas, le facteur de phase est donné par $e^{j\phi_{k,n}}$ avec 
$$\phi_{k,n} = \frac{\pi}{2}(n+k) - \pi nk$$
où $k$ est le rang de la voie de modulation et $n$ est un indice temporel d'échantillon dans la séquence cyclique.

Chacun desdits vecteurs est alors avantageusement complété en insérant $N / 2$ éléments nuls au début de chacun d'entre eux. Alternativement, chacun desdits vecteurs peut être complété en insérant $N / 2$ éléments nuls à la fin de chacun d'entre eux.

Selon un second mode de réalisation, ladite séquence temporelle cyclique est fournie directement à ladite voie d'entrée du modulateur FBMC.

Dans ce cas, lesdits vecteurs sont complétés en insérant $N / 4$ éléments nuls au début et à la fin de chacun d'entre eux, et en effectuant ensuite, pour les voies d'entrée de rang pair, un décalage circulaire de $N / 2$ éléments sur chacun des vecteurs ainsi complétés.

Quel que soit le mode de réalisation, la pré-compensation de phase est avantageusement effectuée en effectuant un produit de Hadamard de la matrice des symboles de modulation **D** avec une matrice $\Omega$ de taille $(NM / 2)\times P$ dont les éléments sont des phaseurs définis par :

$$\Omega_{k\frac{N}{2}+p,t} = e^{j\pi k\alpha(t)}.e^{-j\frac{\pi}{2}(\alpha(t)+k)}.e^{j\theta(p)}$$

où $\alpha(t) = N_{CP} + t(N + N_{CP} + N_{CS})$, $N_{CP}$ et $N_{CS}$ sont respectivement la taille du préfixe cyclique et du suffixe cyclique,

$$\theta(p) = \arg\left( \sum_{t=0}^{KM-1} g(t)e^{-j2\pi\frac{(p-\frac{N}{4})t}{MN/2}} \right)$$

où $K$ est le facteur de recouvrement caractéristique du modulateur FBMC et $g(t)$ est la réponse impulsionnelle du filtre prototype utilisé dans le modulateur FBMC.

De manière similaire, la pré-compensation d'amplitude est avantageusement réalisée en effectuant un produit de Hadamard de la matrice des symboles de modulation **D** avec une matrice $\Gamma$ de taille $(NM / 2) \times P$ dont les éléments sont définis par :

$$\Gamma_{k\frac{N}{2}+p,t} = \left( \left| \sum_{t=0}^{KM-1} g(t)e^{-j2\pi\frac{(p-\frac{N}{4})t}{MN/2}} \right| \right)^{-1}$$

où $K$ est le facteur de recouvrement caractéristique du modulateur FBMC et $g(t)$ est la réponse impulsionnelle du filtre prototype utilisé dans le modulateur FBMC.

L'invention concerne en outre un système d'émission/réception comprenant un émetteur tel que défini précédemment ainsi qu'un récepteur, dans lequel, le récepteur comprend un échantillonneur pour échantillonner le signal reçu en bande de base, un module de suppression des préfixes et des suffixes cycliques, et un module de FFT pour effectuer une FFT de taille $NM / 2$ sur le signal ainsi obtenu tous les $(N + N_{GI})M / 2$ échantillons où $N_{GI}$ est la somme de la taille du préfixe cyclique et de la taille du suffixe cyclique.

Selon une première variante, la trame de symboles de modulation comprend une pluralité de symboles pilotes et le récepteur comprend un estimateur de canal relié aux sorties du module de FFT pour estimer les coefficients du canal pour chaque sous-porteuse, un égaliseur en sortie du module de FFT recevant lesdits coefficients du canal et effectuant une égalisation des sorties du module de FFT pour effectuer une égalisation sous-porteuse.

Selon une seconde variante, l'émetteur comprend, en amont des modules de pré-compensation de phase et d'amplitude, une pluralité de modules de DFT recevant chacun des blocs de symboles à destination ou en provenance d'un utilisateur, la matrice de symboles de modulation étant obtenue à partir des sorties desdits modules de DFT, et le récepteur comprend en aval du module de FFT une même pluralité de modules de IDFT, chaque module de IDFT du récepteur étant associé à un module de DFT de l'émetteur et effectuant, en sortie du module de FFT, une IDFT de même taille que ce dernier pourfournir une estimation desdits blocs de symboles.

## BRÈVE DESCRIPTION DES DESSINS

D'autres caractéristiques et avantages de l'invention apparaîtront à la lecture de modes de réalisation préférentiels de l'invention, en référence aux figures jointes parmi lesquelles :

La Fig. 1 représente de manière schématique un système d'émission/ réception FFT-FBMC connu de l'état de la technique ;
La Fig. 2 représente de manière schématique un système d'émission/ réception BF-OFDM selon un premier mode de réalisation de l'invention ;
La Fig. 3 représente de manière schématique un traitement des symboles de modulation dans d'émetteur de la Fig. 2 ;
La Fig. 4 représente de manière schématique le signal reçu par le récepteur de la Fig. 2 ;
La Fig. 5 représente une portion du spectre du signal reçu par le récepteur de la Fig. 2 pour deux porteuses adjacentes ;
La Fig. 6 représente de manière schématique un système d'émission/ réception BF-OFDM selon une première variante du premier mode de réalisation de l'invention ;
La Fig. 7 représente de manière schématique un système d'émission/réception BF-OFDM selon une seconde variante du premier mode de réalisation de l'invention ;
La Fig. 8 représente de manière schématique un système d'émission/réception BF-OFDM selon un second mode de réalisation de l'invention ;

La Fig. 9 représente de manière schématique un traitement des symboles de modulation dans d'émetteur de la Fig. 8 ;

La Fig. 10 représente de manière schématique un traitement effectué par un émetteur FMC, utile à la compréhension du second mode de réalisation de l'invention ;

La Fig. 11 représente une partie du spectre d'un de signal émis par l'émetteur de la Fig. 8 lorsque des symboles de modulation sont injectés sur des sous-porteuses associées à une porteuse FBMC.

## EXPOSÉ DÉTAILLÉ DE MODES DE RÉALISATION PARTICULIERS

L'idée à la base de la présente invention est d'effectuer une pré-compensation d'amplitude et de phase à l'entrée d'un émetteur FFT-FBMC tel que décrit plus haut, de manière à réduire drastiquement la complexité de récepteur. Comme nous le verrons plus loin, un émetteur FFT-FBMC pourvu d'une telle pré-compensation peut être considéré de manière équivalente comme un émetteur OFDM à filtrage par blocs. Nous montrerons alors que le récepteur peut se résumer à une simple FFT. Pour cette raison, nous désignerons indifféremment le système selon l'invention comme un système FFT-FBMC avec pré-compensation de phase/amplitude à l'émission ou comme un système BF-OFDM (*Block Filtered OFDM*).

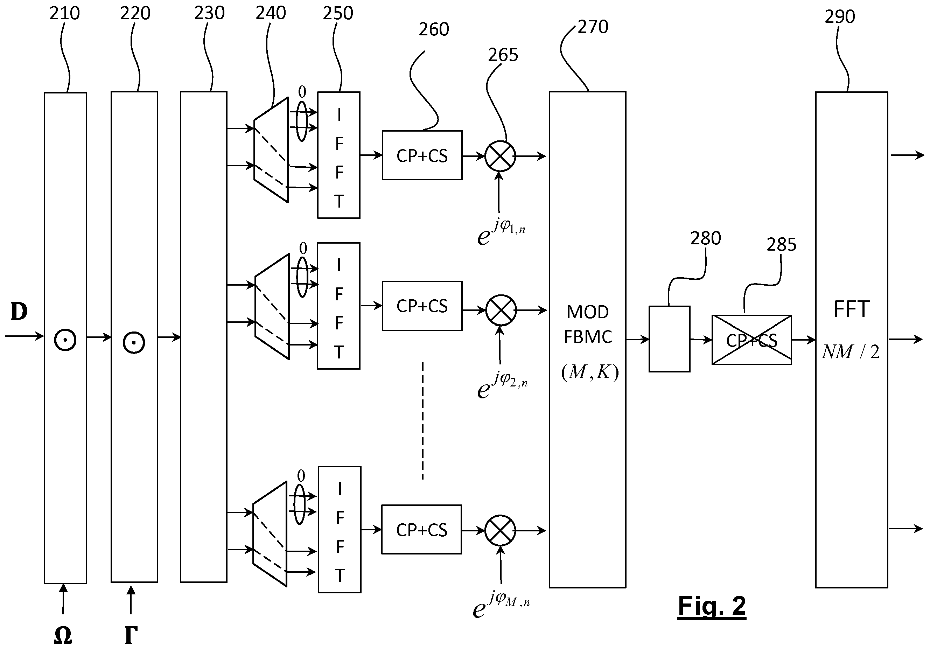

Plus précisément, la Fig. 2 représente de manière schématique un système d'émission/ réception BF-OFDM selon un premier mode de réalisation de l'invention.

Les symboles de modulation (complexes) à transmettre sont groupés sous forme d'un ensemble de $P$ blocs de taille $MN / 2$. L'ensemble de ces blocs peut constituer une trame de longueur $PMN / 2$. Une trame peut ainsi être considérée comme une matrice **D** de taille $(MN / 2) \times P$ dont les éléments sont les symboles de modulation en question.

Chaque trame de symboles fait d'abord l'objet d'une pré-compensation de phase en 210 et d'une pré-compensation d'amplitude en 220. Il convient de noter que l'ordre de la pré-compensation de phase et la compensation d'amplitude est indifférent. En outre, les pré-compensations de phase et d'amplitude peuvent être regroupées en une seule opération de pré-compensation.

La pré-compensation de phase en 210 peut être représentée par une matrice $\Omega$ de taille $(MN / 2) \times P$ dont les éléments sont de simples phaseurs. L'élément $\Omega_{k\frac{N}{2}+p,t}$ de la matrice $\Omega$, correspondant à la $k\frac{N}{2}+p$ -ème ligne et à la $t$-ème colonne où $k$ est l'indice de la porteuse (FBMC), $p$ l'indice de la sous-porteuse (OFDM) et $t$ est l'indice temporel, est défini par :

$$\Omega_{k\frac{N}{2}+p,t} = e^{j\pi k\alpha(t)}.e^{-j\frac{\pi}{2}(\alpha(t)+k)}.e^{j\theta(p)} \tag{6}$$

avec :

$$\alpha(t) = N_{CP} + t(N + N_{CP} + N_{CS}) \tag{7}$$

où $N_{CP}$ et $N_{CS}$ sont les tailles respectives de préfixe et de suffixe définis plus loin et :

$$\theta(p) = \arg\left( \sum_{t=0}^{KM-1} g(t)e^{-j2\pi\frac{(p-\frac{N}{4})t}{MN/2}} \right) \tag{8}$$

où $g(t)$ est la réponse du filtre prototype.

Les deux premiers termes multiplicatifs intervenant dans la compensation de phase (6) visent à corriger la rotation de phase sur chacune des porteuses en raison des termes de phase $e^{j\phi_{k,n}}$ intervenant dans la modulation FBMC (cf. expression (2)).

Il est à noter que ces deux termes multiplicatifs sont indépendants de la sous-porteuse FBMC considérée.

Le troisième terme multiplicatif intervenant dans la pré-compensation de phase (6) vise à corriger sur chacune des sous-porteuses le déphasage introduit par le filtre prototype du modulateur FBMC. On notera que cette correction est indépendante de la porteuse.

La pré-compensation de phase est réalisée par le produit de Hadamard de la matrice de symboles de modulation **D** par la matrice de compensation de phase $\Omega$.

De manière similaire, la pré-compensation d'amplitude en 220 peut être représentée par une matrice $\Gamma$ de taille

$(MN / 2) \times P$ dont les éléments sont des facteurs scalaires. L'élément $\Gamma_{k\frac{N}{2}+p,t}$ de la matrice $\Gamma$ correspondant à la

$k\dfrac{N}{2} + p$ -ème ligne et à la $t$-ème colonne, où $k$ est l'indice de la porteuse (FBMC), $p$ l'indice de la sous-porteuse (OFDM) et $t$ est l'indice temporel, est défini par :

$$\Gamma_{k\frac{N}{2}+p,t} = \left(\left|\sum_{t=0}^{KM-1} g(t)e^{-j2\pi\frac{(p-\frac{N}{4})t}{MN/2}}\right|\right)^{-1} \tag{9}$$

On notera que la pré-compensation d'amplitude ne dépend pas de l'indice $k$ de la porteuse mais seulement de l'indice $p$ la sous-porteuse. Cette loi de compensation est donc identique pour chacune des $M$ porteuses dans la mesure où l'on utilise le même filtre prototype pour chacune de ces porteuses.

On pourra notamment choisir comme filtre prototype le filtre PHYDYAS décrit dans l'article de Bellanger intitulé « *FBMC physical layer : a primer-Phydias* » disponible sous le site www.ict-phydyas.org. On rappelle que celui-ci est défini par :

$$g(t) = \sum_{q=0}^{K-1} G[q](-1)^{q+1}\cos\left(2\pi\frac{q-1}{M}t\right) \tag{10}$$

Par exemple, pour $K$=4 on a : $G[0]$=1; $G[1]$=0.97196; $G[2]=\sqrt{2}/2$ ; $G[3]=\sqrt{1-G[1]^2}$ .

D'autres types de filtre prototype pourront être envisagés sans sortir du cadre de la présente invention, notamment un filtre prototype gaussien ou bien en cosinus surélevé.

La pré-compensation en amplitude est réalisée par le produit de Hadamard de la matrice de symboles de modulation (ici déjà compensés en phase) par la matrice de compensation d'amplitude $\Gamma$.

Le résultat de la pré-compensation de phase et d'amplitude est par conséquent une matrice de taille $(MN / 2) \times P$ définie par :

$$\mathbf{D'} = \mathbf{\Gamma} \circ \mathbf{\Omega} \circ \mathbf{D} \tag{11}$$

où $\circ$ est le produit de Hadamard (produit élément par élément) de deux matrices.

La matrice **D'** des symboles de modulation compensés en phase et en amplitude est ensuite segmentée dans le module de segmentation 230 pour fournir à chaque instant $t$, $M$ blocs de taille $N / 2$. Plus précisément, le module de segmentation segmente la colonne d'indice $t$ en $M$ vecteurs-colonne $\mathbf{d}'_{k,t}$ , $k = 0,..,M-1$ dont les composantes sont $d'_{k\frac{N}{2}+i,t}$ , $i = 1,...,\dfrac{N}{2}$ avec :

$$d'_{k\frac{N}{2}+i,t} = d_{k\frac{N}{2}+i,t}\,\Omega_{k\frac{N}{2}+i,t}\,\Gamma_{k\frac{N}{2}+i,t} \tag{12}$$

Chacun des $M$ vecteurs-colonne ou blocs $\mathbf{d}'_{k,t}$ est complété par des zéros d'isolation au moyen de modules de multiplexage 240 pour former des vecteurs complétés $\overline{\mathbf{d}}'_{k,t}$ , $k = 0,..,M-1$, de taille $N$ définis par :

$$\overline{\mathbf{d}}_{k,t}' = \left(0,...,0, d'_{k\frac{N}{2}+1,t}, ..., d'_{(k+1)\frac{N}{2},t}\right)^T \qquad (13\text{-}1)$$

Autrement dit, chacun des vecteurs $\overline{\mathbf{d}}_{k,t}'$ est obtenu en insérant $N/2$ zéros avant les composantes du vecteur $\mathbf{d}_{k,t}'$. Selon une variante (non représentée), on pourra placer $N/2$ zéros d'isolation en fin des blocs $\mathbf{d}_{k,t}'$ pour obtenir des vecteurs complétés $\overline{\mathbf{d}}_{k,t}'$, soit :

$$\overline{\mathbf{d}}_{k,t}' = \left(d'_{k\frac{N}{2}+1,t}, ..., d'_{(k+1)\frac{N}{2},t}, 0,...,0\right)^T \qquad (13\text{-}2)$$

On remarque que cette variante se déduit de la précédente en ce que l'on effectue un décalage circulaire de $N/2$ sur les éléments des vecteurs complétés.

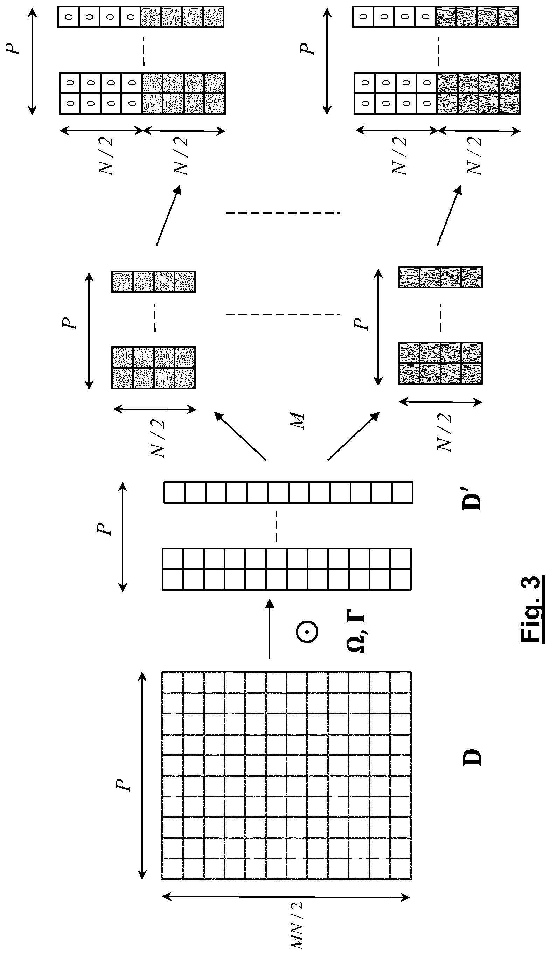

La Fig. 3 représente de manière schématique le traitement des symboles d'information dans le premier mode de réalisation pour obtenir les vecteurs $\overline{\mathbf{d}}_{k,t}'$, $k = 0,..,M$ -1.

On a illustré en 310 la matrice **D** des symboles d'information à l'entrée du module 210. Les différentes lignes correspondent à des indices de fréquence $(k\frac{N}{2}+p)$ et les différentes colonnes à des indices de temps ($t$).

Après multiplication élément par élément par les matrices de compensation de phase et en amplitude, on obtient en 320 la matrice **D'** de même taille que la matrice **D.**

La matrice **D'** est segmentée en $M$ sous-matrices de taille $(N/2) \times P$. On a supposé ici que l'on utilisait le bourrage par zéros d'isolation donné par (13-1). On insère au-dessus des lignes de chaque sous-matrice $N/2$ lignes de zéros. Autrement dit, les colonnes de chacune de ces sous-matrices sont complétées par $N/2$ zéros en début de chaque colonne pour former les vecteurs complétés $\overline{\mathbf{d}}_{k,t}'$. On comprendra que deux vecteurs $\mathbf{d}_{k,t}'$ relatifs à deux porteuses successives $k$ et $k+1$ sont ainsi isolés par $N/2$. Le même résultat sera atteint si l'on utilise la variante de bourrage définie par (13-2).

Chaque vecteur complété $\overline{\mathbf{d}}_{k,t}'$, $k = 0,..,M$ -1, est ensuite soumis en 250 à une IFFT de taille $N$ pour obtenir une séquence d'échantillons temporels.

Un préfixe cyclique et un suffixe cyclique sont concaténés à chaque séquence d'échantillons temporels dans le module 260. Plus précisément, on considère les $N_{CS}$ premiers et les $N_{CP}$ derniers échantillons de cette séquence, on recopie les $N_{CP}$ derniers échantillons au début de ladite séquence et les $N_{CS}$ premiers échantillons à la fin de cette séquence. On obtient ainsi une séquence cyclique de longueur $N + N_{GI}$ où $N_{GI} = N_{CP} + N_{CS}$ est la longueur de l'intervalle de garde entre deux séquences successives dans le temps.

Les zéros d'isolation permettent d'isoler les ($M$) différents flux dans l'espace des fréquences. De même, l'insertion des intervalles de garde permet d'isoler les blocs de chaque flux dans l'espace de temps. Ces deux mesures permettent d'éliminer l'interférence intrinsèque pour un canal plat et sans délai.

Après modulation OQAM en 265 (c'est-à-dire après multiplication par les termes de phase $e^{j\phi_{k,n}}$), les $M$ séquences cycliques sont respectivement fournies aux $M$ voies d'entrée d'un modulateur FBMC, 270, caractérisé par le nombre de porteuses $M$ et le facteur de recouvrement $K$ des filtres de synthèse. Le modulateur FBMC peut être implémenté dans le domaine temporel ou dans le domaine fréquentiel comme décrit dans la demande FR-A-3013928 précitée.

On comprendra que la pré-compensation de phase et la pré-compensation d'amplitude ont pour but de compenser la rotation de phase et l'atténuation subies par chaque échantillon de chacune des séquences cycliques dans le modulateur FBMC.

Le signal en sortie du modulateur FBMC est transmis sur le canal 280, après transposition en bande RF.

A la réception, après transposition en bande de base, le signal est échantillonné à la cadence $M.\Delta f$ (échantillonneur non représenté) où $\Delta f$ est l'espace inter-porteuse (FBMC).

Les échantillons sont ensuite soumis à une FFT de taille $NM/2$ tous les $(N + N_{GI})M/2$ échantillons, autrement dit les échantillons correspondant aux intervalles de garde sont éliminés en 285.

Les blocs en sortie du module de FFT 290 fournissent une estimation des symboles d'information transmis,

$$\hat{d}_{k\frac{N}{2}+i,t},\quad k = 0,...,M\text{-}1,\ i = 1,...,N/2.$$

Dans une application pratique où l'émetteur est installé dans une station de base et le récepteur dans un terminal mobile, le flux de données sur la voie descendante utilisera une ou plusieurs porteuses FBMC, voire une fraction des $N/2$ sous-porteuses associées à une porteuse FBMC. Dans tous les cas, le récepteur ne récupérera que les symboles d'information qui le concernent. Ainsi, par exemple si les symboles d'information à destination du terminal mobile sont portés par la porteuse d'indice $k_0$, seules les sorties de la FFT de rang $k_0\dfrac{N}{2}+p$ avec $p \in \left[0,\dfrac{N}{2}\right[$ seront alors prises en considération.

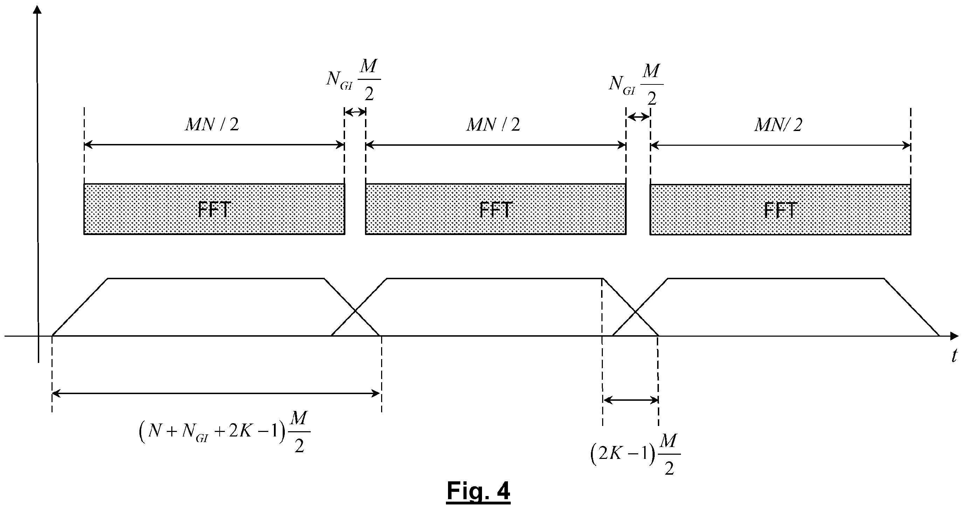

La Fig. 4 représente schématiquement le signal temporel reçu par le récepteur de la Fig. 2.

L'axe des abscisses est ici l'axe des temps et l'axe des ordonnées est celui des amplitudes.

Le signal reçu est constitué d'une séquence de symboles OFDM de taille $(N + N_{GI})M/2 + (2K\text{-}1)M/2$ échantillons, le second terme apparaissant dans cette expression étant dû à la réponse impulsionnelle du filtre prototype.

Les fenêtres FFT de taille $NM/2$ doivent être centrées sur les symboles OFDM. Différentes techniques connues de l'homme du métier spécialisé dans la modulation OFDM pourront être utilisées.

Pour éviter l'interférence entre symboles OFDM, l'intervalle de garde doit vérifier deux contraintes :

$$N_{GI} > 2K - 1 \tag{14}$$

La contrainte (14) a pour objet d'éviter le chevauchement temporel dû à la queue de la réponse impulsionnelle du filtre prototype. En pratique, on pourra choisir l'intervalle de garde plus faible que celui imposé par la condition (14) à condition que le niveau d'interférence résultant soit suffisamment bas pour permettre la démodulation.

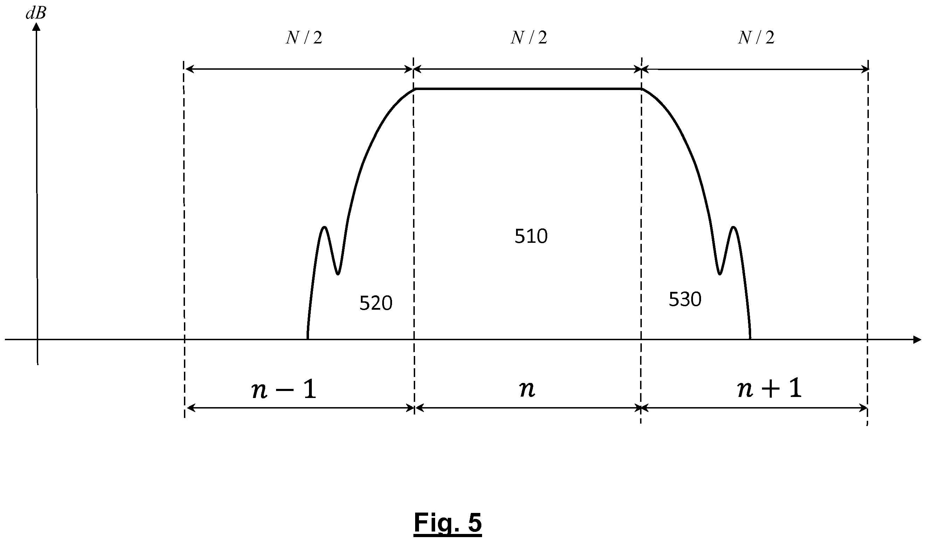

La Fig. 5 représente une portion du spectre du signal reçu par le récepteur de la Fig. 2 pour trois porteuses successives, $n$-1,$n$,$n$+1.

On suppose que l'on a émis un même symbole de modulation sur les sous-porteuses associées à la porteuse de rang $n$ et des symboles nuls sur les sous-porteuses associées aux porteuses de rang $n$-1 et $n$+1.

Le canal a été supposé plat.

Le spectre est ici représenté autour de la porteuse $n$. La largeur de la bande, 510, est de taille $N/2$. On remarque que le spectre est parfaitement plat et ne présente aucune atténuation dans cette bande. Ceci résulte de la pré-compensation d'amplitude au sein de l'émetteur, en amont de la modulation FBMC.

En revanche, hors de la bande $n$, le signal reçu présente des lobes secondaires dans une première zone, 520, de taille $N/4$, dans la bande $n$-1 ainsi que dans une seconde zone, 530, également de taille $N/4$, dans bande $n$+1. Ces lobes secondaires sont de faible amplitude par rapport au signal utile.

On voit ainsi que deux bandes adjacentes telles que $n$-1,$n$ ou $n$,$n$+1 n'interfèrent que très peu.

La réponse plate dans la bande de transmission permet d'effectuer directement une estimation de canal à l'aide de symboles pilotes et une égalisation par sous-porteuse comme dans un récepteur OFDM classique.

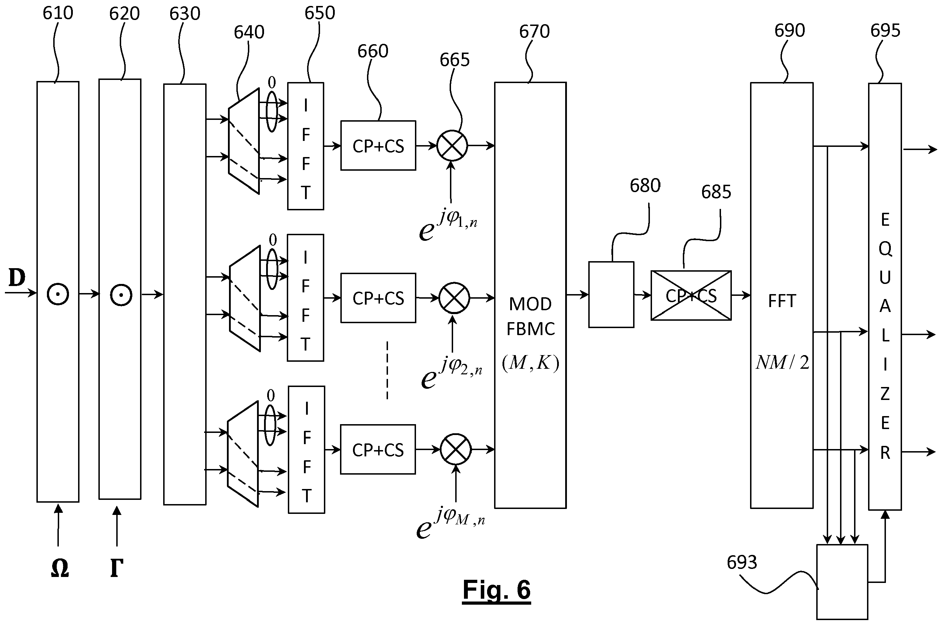

La Fig. 6 représente de manière schématique un système d'émission/réception BF-OFDM selon une première variante du premier mode de réalisation

Cette première variante diffère du mode de réalisation de la Fig. 2 en ce qu'une égalisation de canal est effectuée sous-porteuse par sous-porteuse au niveau du récepteur.

Les références 610 à 690 désignent des éléments identiques à ceux portant les références 210 à 290 dans la Fig. 2.

L'estimateur de canal 693 effectue une estimation de canal sur la base de symboles pilotes distribués dans les bandes spectrales autour des fréquences porteuses, à savoir $k\dfrac{N}{2}+p$, $k = 0,..,M\text{-}1,$ $p \in \left[0,\dfrac{N}{2}\right[$.

Les coefficients d'atténuation du canal sont déterminés à partir des symboles pilotes et fournis à l'égaliseur 695 qui effectue une égalisation sous-porteuse par sous-porteuse de manière connue en soi (ZF ou MMSE par exemple).

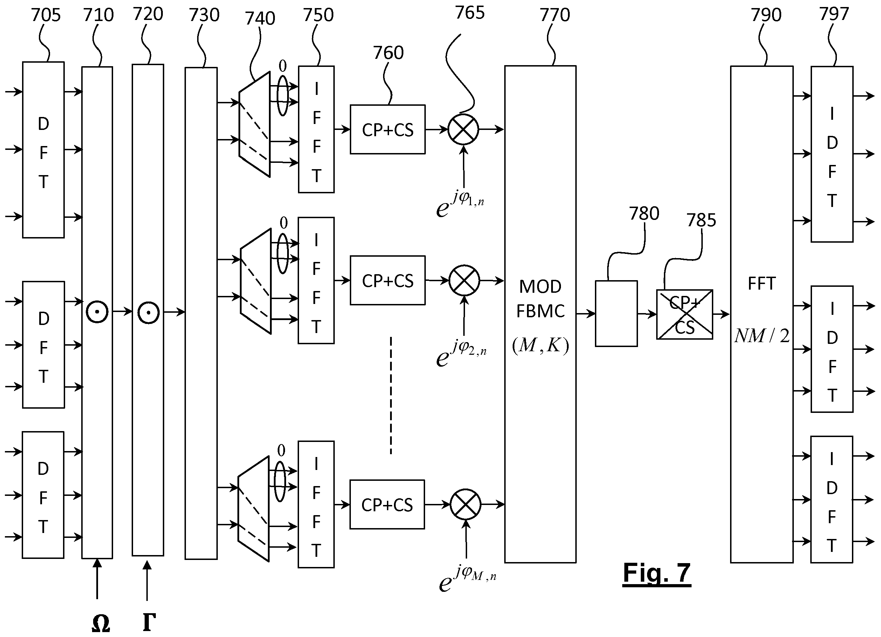

La Fig. 7 représente de manière schématique un système d'émission/réception BF-OFDM selon une seconde variante du premier mode de réalisation.

Cette seconde variante permet une réduction du facteur de crête ou PAPR (*Peak to Average Power Ratio*) du signal transmis en effectuant une DFT (*Discrete Fourier Transform*) des symboles à moduler en amont de la pré-compensation en phase et en amplitude.

Les références 710 à 790 désignent des éléments identiques à ceux portant les références 210 à 290 dans la Fig. 2.

A la différence du système de la Fig. 2, l'émetteur comprend, en amont des modules de pré-compensation de phase 710 et d'amplitude 720, des modules DFT, 705, réalisant un étalement de la puissance dans le domaine fréquentiel sur un bloc de sous-porteuses. Chaque module 705 offre un accès relatif à un utilisateur de manière similaire à la technique SC-FDMA (Single Carrier FDMA).

Ainsi, par exemple, pour une liaison montante, chaque module 705 effectue une DFT sur les symboles de modulation à destination de la station de base, les échantillons fréquentiels en sortie des différents modules 705 étant ensuite traités comme des éléments de la matrice **D.** Les tailles de DFT des modules 705 peuvent être différentes selon le débit requis par (ou pour) l'utilisateur.

A la réception, de manière duale, une IDFT (*Inverse Discrete Fourier Transform*) est réalisée par bloc de sous-porteuses dans les modules 797 pour restaurer les symboles de modulation. Les tailles des IDFT correspondent respectivement à celles des DFT réalisées par les modules 705.

Une égalisation sous-porteuse par sous-porteuse selon le principe illustré en Fig. 6 peut en outre être appliquée dans le récepteur de la Fig. 7, entre le module de FFT 790 et les modules d'IDFT 797.

De manière générale, les techniques de précodage utilisées dans le domaine de l'OFDM trouvent également application dans le système d'émission/réception selon la présente invention. Ainsi, on pourra envisager d'effectuer un codage STBC, en amont des modules de pré-compensation de phase et d'amplitude comme dans un système MIMO-ODFM, le traitement à la réception étant effectué comme dans un récepteur MIMO-OFDM conventionnel.

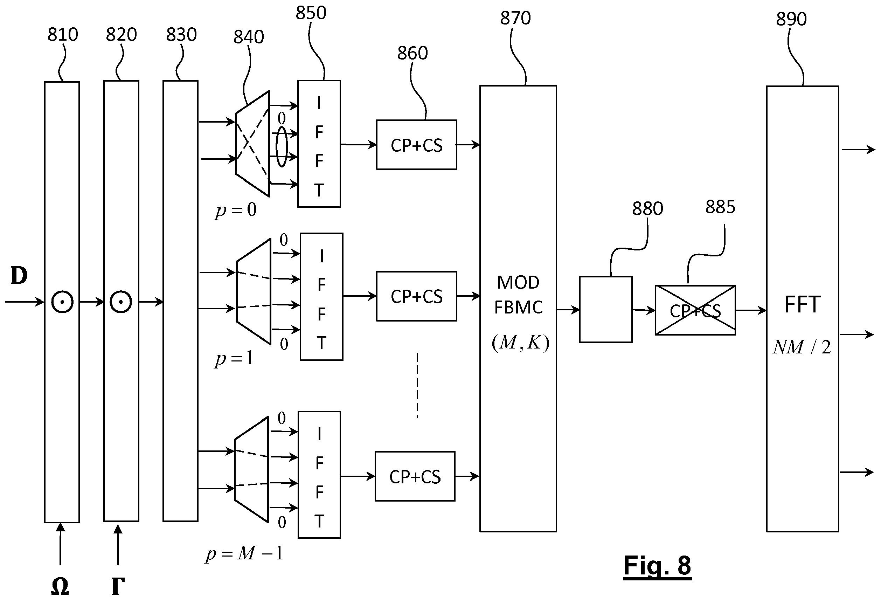

La Fig. 8 représente de manière schématique un système d'émission/réception BF-OFDM selon un second mode de réalisation de l'invention.

Ce second mode de réalisation diffère du premier en ce que la modulation OQAM (c'est-à-dire la multiplication par les termes de phase $e^{j\phi_{k,n}}$) est supprimée à l'entrée du modulateur FBMC. On rappelle que la multiplication par les facteurs de phase $e^{j\phi_{k,n}}$ permet d'assurer l'orthogonalité au sein du modulateur FBMC. Comme expliqué plus loin, on a pu montrer que l'on pouvait se passer de cette modulation à condition de modifier la construction des vecteurs complétés.

Plus précisément, les modules 810-830, 850-890 du second mode de réalisation sont respectivement identiques aux modules 210-230, 250-290 du premier mode de réalisation et leur description ne sera donc pas répétée ici. En revanche, les modules de multiplexage 840 diffèrent des modules de multiplexage 240.

Chaque module 840 associé à une porteuse de rang impair, $p = 2v+1$, $v = 0,...,\dfrac{M}{2}-1,$ complète un vecteur $\mathbf{d}'_{k,t}$ en insérant de part et d'autre de ses composantes $N/4$ zéros d'isolation pour obtenir un vecteur complété $\overline{\mathbf{d}}'_{k,t}$, soit :

$$\overline{\mathbf{d}}'_{k,t} = \left(0,..,0, d'_{k\frac{N}{2}+1,t},...,d'_{(k+1)\frac{N}{2},t}, 0,...,0\right)^T \qquad (15\text{-}1)$$

A l'inverse, chaque module 840 associé à une porteuse de rang pair, $p = 2v,$ $v = 0,...,\dfrac{M}{2}-1,$ recopie les $N/4$ premiers éléments du vecteur $\mathbf{d}'_{k,t}$ sur les $N/4$ derniers éléments du vecteur complété $\overline{\mathbf{d}}'_{k,t}$ ainsi que les $N/4$ derniers éléments du vecteur $\mathbf{d}'_{k,t}$ sur les $N/4$ premiers éléments du vecteur complété $\overline{\mathbf{d}}'_{k,t}$, et insère $N/2$ zéros d'isolation entre ces $N/4$ premiers et ces $N/4$ derniers éléments, soit :

$$\overline{\mathbf{d}}'_{k,t} = \left(d'_{k\frac{N}{2}+\frac{N}{4}+1,t},...,d'_{(k+1)\frac{N}{2},t}, 0,...,0, d'_{k\frac{N}{2}+1,t},...,d'_{k\frac{N}{2}+\frac{N}{4},t}\right)^T \qquad (15\text{-}2)$$

De manière équivalente, le module de multiplexage 840 associé à une porteuse de rang pair effectue une insertion de $N / 4$ zéros au début et à la fin de chaque vecteur $\mathbf{d}'_{k,t}$ pour obtenir un vecteur complété, comme en (15-1), puis effectue un décalage circulaire de $N / 2$ éléments sur le vecteur ainsi complété pour obtenir le vecteur $\overline{\mathbf{d}}'_{k,t}$ défini en (15-2).

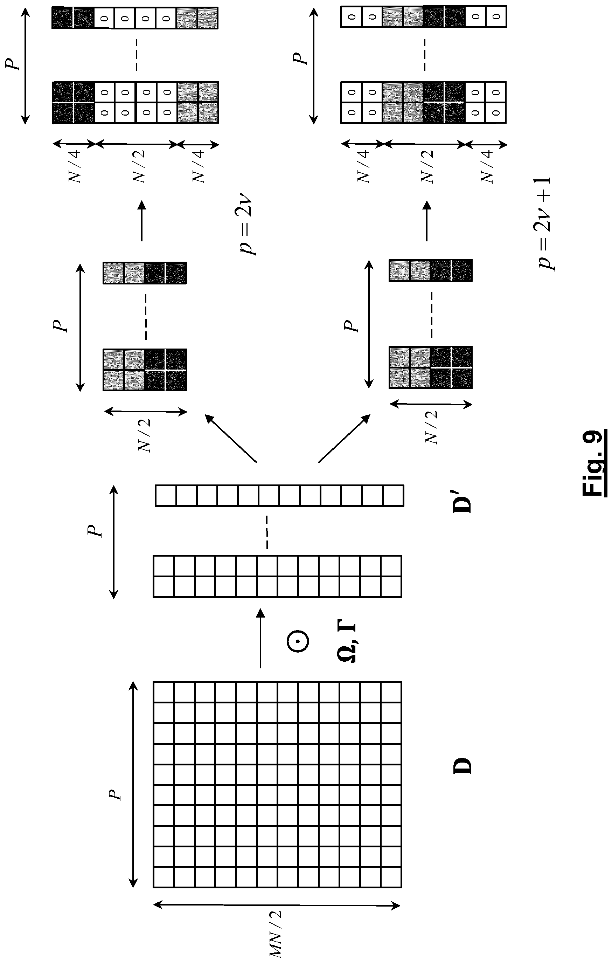

La Fig. 9 représente de manière schématique le traitement des symboles d'information dans le second mode de réalisation pour obtenir les vecteurs $\overline{\mathbf{d}}'_{k,t}$, $k = 0,..,M$ -1.

On a illustré en 910 la matrice **D** des symboles d'information à l'entrée du module 810. Les différentes lignes correspondent à des indices de fréquence $( k \dfrac{N}{2} + p )$ et les différentes colonnes à des indices de temps (*t*).

Après multiplication élément par élément par les matrices de compensation de phase et en amplitude, on obtient en 820 la matrice **D'** de même taille que la matrice **D**.

La matrice **D'** est segmentée en *M* sous-matrices de taille $(N / 2) \times P$, chaque sous-matrice étant associée à une porteuse et constituée de *P* vecteurs colonne.

Lorsque la porteuse est de rang impair, chaque vecteur-colonne de la sous-matrice est complété par $N / 4$ zéros d'isolation de part et d'autre pour obtenir un vecteur complété de taille *N*.

Lorsque la porteuse est de rang pair, chaque vecteur-colonne est divisé en deux parties. La première partie, constituée des $N / 4$ premiers éléments de ce vecteur, est recopiée (dans le même ordre) à la fin du vecteur $\overline{\mathbf{d}}'_{k,t}$. La seconde partie, constituée des $N / 4$ derniers éléments, est, quant à elle, recopiée (dans le même ordre) au début du vecteur $\overline{\mathbf{d}}'_{k,t}$. Enfin, on insère $N / 2$ zéros d'isolation entre les deux parties recopiées pour obtenir le vecteur complété, $\overline{\mathbf{d}}'_{k,t}$, de taille *N.*

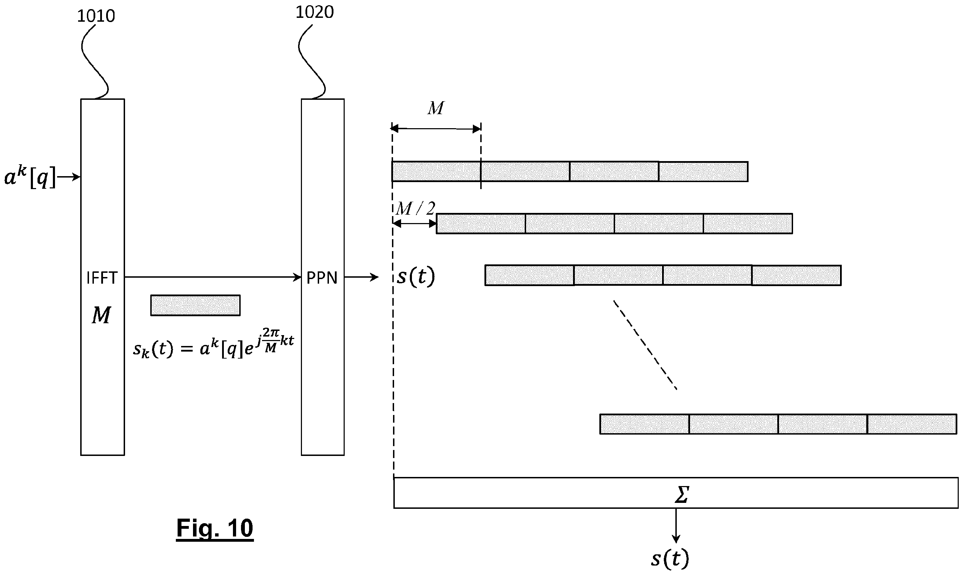

Le fonctionnement du système BF-OFDM selon le second mode de réalisation sera expliqué ci-après à l'aide des Figs. 10-11.

On a illustré en Fig. 10 un modulateur FBMC sous forme simplifiée, implémenté dans le domaine temporel. Celui-ci comprend un module de IFFT, 1010, de taille *M* (nombre de porteuses FBMC) suivi d'un banc de filtres polyphasés, 1020 construits à partir du filtre prototype.

On suppose que l'on injecte sur la porteuse *k* des symboles $a^k[q]$ où *q* est l'indice du bloc à l'entrée du module de IFFT, des symboles nuls étant injectés sur les autres porteuses. Le signal en sortie du module IFFT est par conséquent un signal temporel :

$$s_k(t) = a^k[q]e^{j\frac{2\pi}{M}kt} \qquad\qquad (16)$$

de durée *T* (intervalle entre blocs successifs), comprenant *M* échantillons. Le signal en sortie du banc de filtres polyphasés est la somme de séquences de symboles OFDM décalées de *T* / 2, chaque symbole OFDM ayant un durée de *KT,* comme représenté dans la partie droite de la figure, autrement dit :

$$s(t) = \sum_{q=-K+1}^{K-1} a^k[q]g(t)e^{j\frac{2\pi}{M}k(t+q\frac{M}{2})} \qquad\qquad (17)$$

Dans un récepteur FBMC conventionnel, on effectue une FFT de taille *M* en sortie du banc de filtres d'analyse. Dans le récepteur BF-OFDM du second mode de réalisation, on effectue une FFT de taille $MN / 2$ en raison de la granularité fréquentielle introduite par les *N* sous-porteuses OFDM. Le nombre d'échantillons à prendre en considération est celui de *N* symboles OFDM consécutifs décalés de *M* / 2, soit $NM / 2$.

Compte tenu de l'insertion du préfixe cyclique donnant une forme circulaire au signal et de la durée de la réponse du filtre prototype, on peut montrer que la sortie du FFT à la porteuse *k* est donnée par :

$$Y^k\left[f\right] = \sum_{q=0}^{N-1} a^k\left[q\right] \sum_{t=0}^{KM-1} g(t) e^{j\frac{2\pi}{M}kt} e^{-j\frac{2\pi}{NM/2}(t+qM/2)f} \tag{18}$$

soit, encore :

$$Y^k\left[f\right] = \sum_{q=0}^{N-1} a^k\left[q\right] \sum_{t=0}^{KM-1} g(t) e^{-j\frac{2\pi}{NM/2}t\left(f-k\frac{N}{2}\right)} e^{-j\frac{2\pi}{N}qf} \tag{19}$$

En intervertissant les signes somme et en calculant la FFT, on obtient :

$$Y^k\left[f\right] = G(f - k\frac{N}{2}) \sum_{q=0}^{N-1} a^k\left[q\right] e^{-j\frac{2\pi}{N}qf} \tag{20}$$

On suppose maintenant que l'on injecte sur la porteuse $k$ une sinusoïde pure de fréquence $\dfrac{p}{T}$, soit

$a^k[q] = b^{k,p} e^{j\frac{2\pi}{N}pq}$, où est l'amplitude de la sinusoïde injectée. La sortie de la FFT à la porteuse $k$ s'écrit :

$$Y^k\left[f\right] = G(f - k\frac{N}{2}) N b^{k,p} D\left(f - p\right) \tag{21}$$

où $D$ est un peigne de Dirac de périodicité $N$, autrement dit $D(f\text{-}p)=1$ si $f\text{-}p$ est un multiple de $N$ et $D(f\text{-}p) = 0$ sinon.

La réponse spectrale du filtre prototype présente une région centrale relativement plate de largeur $N/2$ et un affaiblissement important aux multiples de $N$.

Pour obtenir une faible déformation du signal injecté sur la sous-porteuse $k$ et une bonne réjection de l'interférence, la fréquence du signal injecté devra respecter la contrainte :

$$k\frac{N}{2} - \frac{N}{4} \le p\left[\mathrm{mod.}\,N\right] < k\frac{N}{2} + \frac{N}{4} \tag{22}$$

Si la porteuse est de rang $k$ pair, $k\dfrac{N}{2} = 0\left[\mathrm{mod.}\,N\right]$, la contrainte sur la fréquence de la sous-porteuse peut se réduire à :

$$-\frac{N}{4} \le p\left[\mathrm{mod.}\,N\right] < \frac{N}{4} \tag{23-1}$$

A l'inverse, si la porteuse est de rang $k$ impair, $k\dfrac{N}{2} = \dfrac{N}{2}\left[\mathrm{mod.}\,N\right]$, la contrainte sur la fréquence de la sous-porteuse peut se réduire à :

$$\frac{N}{4} \le p\left[\mathrm{mod.}\,N\right] < \frac{N}{2} \quad \text{ou} \quad -\frac{N}{2} \le p\left[\mathrm{mod.}\,N\right] < -\frac{N}{4} \tag{23-2}$$

On retrouve ainsi les règles de multiplexage utilisées dans les modules 840 pour obtenir les vecteurs complétés $\overline{\mathbf{d}}'_{k,t}$.

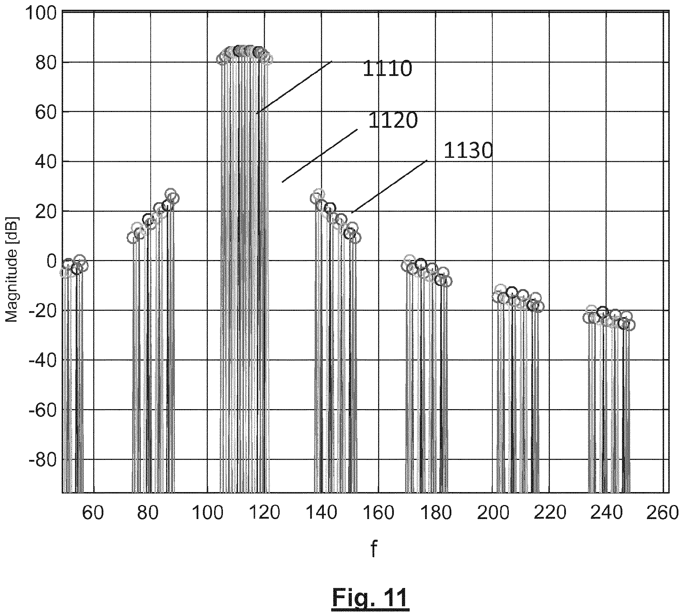

La Fig. 11 illustre un exemple de spectre en sortie de l'émetteur du système BF-OFDM de la Fig. 8.

Plus précisément, on a supposé ici que l'on injectait des symboles sur la porteuse de rang $k = 6$. Le nombre de porteuses a été pris à $M = 128$ et le nombre de sous-porteuses (par porteuse) à $N = 32$. Le rang étant pair, les symboles ont été placés sur les sous-porteuses $\left[ -\dfrac{N}{4} + kN, kN + \dfrac{N}{4} \right[$. A la réception, les sous-porteuses portant le signal utile sont par conséquent de rang compris entre $\left[ -\dfrac{N}{4} + k\dfrac{N}{2}, k\dfrac{N}{2} + \dfrac{N}{4} \right[$, c'est-à-dire [88,104[ (représenté sur la figure 10 en [104,120[ car la valeur initiale y a été prise égale à 1).

La partie utile 1110 correspond à une zone centrale du filtre prototype où la réponse spectrale est relativement plate. Les bandes adjacentes 1120 sont vides en raison de la réjection par le filtre prototype. Les bandes 1130 correspondent à de l'interférence générée par le signal utile 1110. Toutefois, le niveau d'interférence étant inférieur de 60dB au niveau du signal utile, cette interférence est très faible.

Enfin, l'homme du métier comprendra que les première et seconde variantes du premier mode de réalisation, décrites en relation avec les figures 6 et 7 s'appliquent également au second mode de réalisation. Ainsi, il est possible de prévoir une égalisation sous-porteuse en sortie du module de FFT 890 comme en Fig. 6. De manière similaire, il est possible d'effectuer une DFT par blocs sur les symboles de modulation avant la compensation de phase/amplitude 810-820 et une IDFT par blocs en sortie du module de FFT 890, de manière à réduire le PAPR. En outre, comme pour le premier mode de réalisation, ces deux variantes peuvent être combinées.

**Revendications**

1. Emetteur destiné à transmettre une trame de symboles de modulation complexes représentée sous la forme d'une matrice (**D**) de taille $(NM/2) \times P$ de symboles de modulation où $P$ est la longueur de la trame, $M$ est un nombre pair de porteuses d'un modulateur FBMC (270,870)) et $N$ est un nombre de sous-porteuses d'un multiplex OFDM, chaque colonne de la matrice étant segmentée par un module de segmentation (230,830) en $M$ vecteurs de taille $N/2$, chacun desdits vecteurs étant complété (240,840) de part et d'autre par $N/2$ éléments nuls pour former un vecteur complété de taille $N$, chaque vecteur complété faisant l'objet d'une transformation dans un module IFFT (250,850) de taille $N$ pour fournir une séquence temporelle à laquelle sont concaténés un préfixe cyclique et un suffixe cyclique (260,860), la séquence temporelle cyclique ainsi obtenue étant fournie à une voie d'entrée du modulateur FBMC (270,870), ledit émetteur étant **caractérisé en ce que** les symboles de modulation de la trame subissent une pré-compensation en phase dans un premier module de compensation (210,810) et une pré-compensation en amplitude dans un second module de compensation (220,820) avant d'être fournis au module de segmentation (230,830), la pré-compensation en phase et en amplitude étant adaptée à compenser les rotations de phase et l'atténuation subies par chaque échantillon de chacune des séquences cycliques au sein du modulateur FBMC (270,870).

2. Emetteur selon la revendication 1, **caractérisé en ce qu'**après concaténation avec un préfixe cyclique et un suffixe cyclique (260), la séquence temporelle cyclique ainsi obtenue est modulée selon une modulation OQAM par multiplication par un facteur de phase (265) avant d'être fournie à une voie d'entrée du modulateur FBMC.

3. Emetteur selon la revendication 2, **caractérisé en ce que** le facteur de phase est donné par $e^{j\phi_{k,n}}$ avec

$$\phi_{k,n} = \frac{\pi}{2}(n+k) - \pi nk$$

où $k$ est le rang de la voie de modulation et $n$ est un indice temporel d'échantillon dans la séquence cyclique.

4. Emetteur selon la revendication 2 ou 3, **caractérisé en ce que** chacun desdits vecteurs est complété (240) en insérant $N/2$ éléments nuls au début de chacun d'entre eux.

5. Emetteur selon la revendication 2 ou 3, **caractérisé en ce que** chacun desdits vecteurs est complété (240) en insérant $N/2$ éléments nuls à la fin de chacun d'entre eux.

6. Emetteur selon la revendication 1, **caractérisé en ce que** ladite séquence temporelle cyclique est fournie directement à ladite voie d'entrée du modulateur FBMC.

7. Emetteur selon la revendication 6, **caractérisé en ce que**, lesdits vecteurs sont complétés (840) en insérant $N / 4$ éléments nuls au début et à la fin de chacun d'entre eux, et en effectuant ensuite, pour les voies d'entrée ($k$) de rang pair, un décalage circulaire de $N / 2$ éléments sur chacun des vecteurs ainsi complétés.

8. Emetteur selon l'une des revendications 1-7, **caractérisé en ce que** la pré-compensation de phase est effectuée en effectuant un produit de Hadamard de la matrice des symboles de modulation **D** avec une matrice $\Omega$ de taille $(NM / 2) \times P$ dont les éléments sont des phaseurs définis par :

$$\Omega_{k\frac{N}{2}+p,t} = e^{j\pi k\alpha(t)}.e^{-j\frac{\pi}{2}(\alpha(t)+k)}.e^{j\theta(p)}$$

où $\alpha(t) = N_{CP} + t(N + N_{CP} + N_{CS})$, $N_{CP}$ et $N_{CS}$ sont respectivement la taille du préfixe cyclique et du suffixe cyclique,

$$\theta(p) = \arg\left( \sum_{t=0}^{KM-1} g(t)e^{-j2\pi\frac{(p-\frac{N}{4})t}{MN/2}} \right)$$

où $K$ est le facteur de recouvrement caractéristique du modulateur FBMC et $g(t)$ est la réponse impulsionnelle du filtre prototype utilisé dans le modulateur FBMC.

9. Emetteur selon l'une des revendications précédentes, **caractérisé en ce que** la pré-compensation d'amplitude est effectuée en effectuant un produit de Hadamard de la matrice des symboles de modulation **D** avec une matrice $\Gamma$ de taille $(NM / 2) \times P$ dont les éléments sont définis par :

$$\Gamma_{k\frac{N}{2}+p,t} = \left( \left| \sum_{t=0}^{KM-1} g(t)e^{-j2\pi\frac{(p-\frac{N}{4})t}{MN/2}} \right| \right)^{-1}$$

où $K$ est le facteur de recouvrement caractéristique du modulateur FBMC et $g(t)$ est la réponse impulsionnelle du filtre prototype utilisé dans le modulateur FBMC.

10. Système d'émission/réception comprenant un émetteur selon l'une des revendications précédentes ainsi qu'un récepteur, **caractérisé en ce que** le récepteur comprend un échantillonneur pour échantillonner le signal reçu en bande de base, un module (285,885) de suppression des préfixes et des suffixes cycliques, et un module de FFT (290,890) pour effectuer une FFT de taille $NM / 2$ sur le signal ainsi obtenu tous les $(N + N_{GI})M / 2$ échantillons où $N_{GI}$ est la somme de la taille du préfixe cyclique et de la taille du suffixe cyclique.

11. Système d'émission/réception selon la revendication 10, **caractérisé en ce que** la trame de symboles de modulation comprend une pluralité de symboles pilotes et que le récepteur comprend un estimateur de canal (693) relié aux sorties du module de FFT pour estimer les coefficients du canal pour chaque sous-porteuse, un égaliseur (695) en sortie du module de FFT recevant lesdits coefficients du canal et effectuant une égalisation des sorties du module de FFT pour effectuer une égalisation sous-porteuse.

12. Système d'émission/réception selon la revendication 10, **caractérisé en ce que** l'émetteur comprend, en amont des modules de pré-compensation de phase (710) et d'amplitude (720), une pluralité de modules de DFT (705) recevant chacun des blocs de symboles à destination ou en provenance d'un utilisateur, la matrice de symboles de modulation étant obtenue à partir des sorties desdits modules de DFT, et que le récepteur comprend en aval du module de FFT une même pluralité de modules de IDFT (797), chaque module de IDFT du récepteur étant associé à un module de DFT de l'émetteur et effectuant, en sortie du module de FFT, une IDFT de même taille que ce dernier pour fournir une estimation desdits blocs de symboles.

**Patentansprüche**

1. Sender zum Übertragen eines Rahmens aus komplexen Modulationssymbolen, der als eine Matrix (**D**) der Größe *(NM/2)xP* aus Modulationssymbolen dargestellt wird, wobei *P* die Länge des Rahmens ist, *M* eine gerade Anzahl von Trägern eines FBMC-Modulators (270,870)) ist und *N* eine Anzahl von Unterträgern eines OFDM-Multiplex ist, wobei jede Spalte der Matrix durch ein Segmentierungsmodul (230,830) in *M* Vektoren der Größe *N/2* segmentiert wird, wobei jeder der Vektoren auf beiden Seiten mit *N/2* Null-Elementen zur Bildung eines komplettierten Vektors der Größe *N* komplettiert wird (240,840), wobei jeder komplettierte Vektor in einem IFFT-Modul (250,850) der Größe *N* transformiert wird, um eine Zeitsequenz bereitzustellen, mit der ein zyklisches Präfix und ein zyklisches Suffix (260,860) verknüpft werden, wobei die so erhaltene zyklische Zeitsequenz einem Eingangskanal des FBMC-Modulators (270,870) bereitgestellt wird, wobei der Sender **dadurch gekennzeichnet ist, dass** die Modulationssymbole des Rahmens in einem ersten Kompensationsmodul (210,810) in der Phase vorkompensiert werden und in einem zweiten Kompensationsmodul (220,820) in der Amplitude vorkompensiert werden, bevor sie dem Segmentierungsmodul (230,830) bereitgestellt werden, wobei die Phasen- und Amplitudenvorkompensation dazu ausgelegt ist, die Phasendrehungen und die Dämpfung zu kompensieren, die jeder Abtastwert einer jeden der zyklischen Sequenzen innerhalb des FBMC-Modulators (270,870) erfährt.

2. Sender nach Anspruch 1, **dadurch gekennzeichnet, dass** nach dem Verknüpfen mit einem zyklischen Präfix und einem zyklischen Suffix (260) die so erhaltene zyklische Zeitsequenz gemäß einer OQAM-Modulation durch Multiplikation mit einem Phasenfaktor (265) moduliert wird, bevor sie einem Eingangskanal der FMBC-Modulators bereitgestellt wird.

3. Sender nach Anspruch 2, **dadurch gekennzeichnet, dass** der Phasenfaktor vorgegeben ist durch $e^{j\phi_{k,n}}$ mit

$$\phi_{k,n} = \frac{\pi}{2}(n+k) - \pi nk$$

, worin *k* der Rang des Modulationskanals ist und *n* ein Abtastwert-Zeitindex in der zyklischen Sequenz ist.

4. Sender nach Anspruch 2 oder 3, **dadurch gekennzeichnet, dass** jeder der Vektoren komplettiert wird (240), indem *N/2* Nullelemente am Anfang eines jeden von ihnen eingefügt werden.

5. Sender nach Anspruch 2 oder 3, **dadurch gekennzeichnet, dass** jeder der Vektoren komplettiert wird (240), indem *N/2* Nullelemente am Ende eines jeden von ihnen eingefügt werden.

6. Sender nach Anspruch 1, **dadurch gekennzeichnet, dass** die zyklische Zeitsequenz dem Eingangskanal des FBMC-Modulators direkt bereitgestellt wird.

7. Sender nach Anspruch 6, **dadurch gekennzeichnet, dass** die Vektoren komplettiert werden (840), indem *N/4* Nullelemente am Anfang und am Ende eines jeden von ihnen eingefügt werden und indem dann bei den Eingangskanälen (*k*) mit geradem Rang eine Kreisverschiebung um *N/2* Elemente an jedem der so komplettierten Vektoren erfolgt.

8. Sender nach einem der Ansprüche 1 - 7, **dadurch gekennzeichnet, dass** die Phasen-Vorkompensation dadurch erfolgt, dass ein Hadamard-Produkt der Matrix aus Modulationssymbolen **D** mit einer Matrix Ω der Größe *(NM/2)xP* erstellt wird, deren Elemente Phasoren sind, die definiert sind durch:

$$\Omega_{k\frac{N}{2}+p,t} = e^{j\pi k\alpha(t)} . e^{-j\frac{\pi}{2}(\alpha(t)+k)} . e^{j\theta(p)}$$

worin *α(t) = N_{CP} + t(N+N_{CP}+N_{CS})*, $N_{CP}$ und $N_{CS}$ jeweils die Größe des zyklischen Präfix und des zyklischen Suffix

$$\theta(p) = \arg\left( \sum_{t=0}^{KM-1} g(t)e^{-j2\pi\frac{(p-\frac{N}{4})t}{MN/2}} \right)$$

sind, wobei worin *K* der charakteristische Überlappungsfaktor des FMBC-Modulators und *g(t)* die Impulsantwort des im FBMC-Modulator verwendeten Prototyp-Filters ist.

9. Sender nach einem der vorangehenden Ansprüche, **dadurch gekennzeichnet, dass** die Amplituden-Vorkompensation dadurch erfolgt, dass ein Hadamard-Produkt der Matrix aus Modulationssymbolen **D** mit einer Matrix $\Gamma$ der Größe *(NM/2)xP* erstellt wird, deren Elemente definiert sind durch:

$$\Gamma_{k\frac{N}{2}+p,t} = \left( \left| \sum_{t=0}^{KM-1} g(t)e^{-j2\pi\frac{(p-\frac{N}{4})t}{MN/2}} \right| \right)^{-1}$$

worin *K* der charakteristische Überlappungsfaktor des FBMC-Modulators und *g(t)* die Impulsantwort des im FBMC-Modulator verwendeten Prototyp-Filters ist.

10. Sende-/Empfangssystem mit einem Sender nach einem der vorangehenden Ansprüche sowie mit einem Empfänger, **dadurch gekennzeichnet, dass** der Empfänger einen Abtaster zum Abtasten des empfangenen Signals im Basisband, ein Modul (285,885) zum Unterdrücken der zyklischen Präfixe und Suffixe und ein FFT-Modul (290,890) zum Durchführen einer FFT der Größe *NM / 2* an dem so erhaltenden Signal alle *(N+N$_{GI}$)M / 2* Abtastwerte enthält, wobei *N$_{GI}$* die Summe der Größe des zyklischen Präfix und der Größe des zyklischen Suffix ist.

11. Sende-/Empfangssystem nach Anspruch 10, **dadurch gekennzeichnet, dass** der Rahmen aus Modulationssymbolen eine Mehrzahl von Pilotsymbolen umfasst und dass der Empfänger eine Kanal-Abschätzeinrichtung (693) enthält, die mit den Ausgängen des FFT-Moduls verbunden ist, um die Koeffizienten des Kanals für jeden Unterträger abzuschätzen, wobei ein Abgleicher (695) am Ausgang des FFT-Moduls die Koeffizienten des Kanals empfängt und eine Abgleichung der Ausgänge des FFT-Moduls durchführt, um eine Unterträger-Abgleichung durchzuführen.

12. Sende-/Empfangssystem nach Anspruch 10, **dadurch gekennzeichnet, dass** der Sender den Modulen zur Phasen- (710) und Amplitudenvorkompensation (720) vorgelagert eine Mehrzahl von DFT-Modulen (705) enthält, die jeweils Blöcke von Symbolen an oder von einem Benutzer empfangen, wobei die Matrix aus Modulationssymbolen ausgehend von den Ausgängen der DFT-Module erhalten wird, und dass der Empfänger dem FFT-Modul nachgelagert eine gleiche Mehrzahl von IDFT-Modulen (797) enthält, wobei jedes IDFT-Modul des Empfängers einem DFT-Modul des Senders zugeordnet ist und am Ausgang des FFT-Moduls eine IDFT gleicher Größe wie das letztgenannte durchführt, um eine Abschätzung der Symbolblöcke bereitzustellen.

## Claims

1. Transmitter designed to transmit a frame of complex modulation symbols in the form of a matrix (**D**) with size (*NM / 2*)×*P* of modulation symbols in which *P* is the frame length, *M* is an even number of carriers of an FBMC modulator (270,870) and *N* is a number of sub-carriers of an OFDM multiplex, each column in the matrix being segmented by a segmentation module (230,830) into *M* vectors with size *N/2,* each of said vectors being padded (240,840) on each side by *N/2* null elements to form a complete vector of size *N*, each padded vector being transformed in an IFFT module (250,850) with size *N* to provide a temporal sequence to which a cyclic prefix and a cyclic suffix (260,860) are concatenated, the cyclic temporal sequence thus obtained being output to an input channel of the FBMC modulator (270,870), said transmitter being **characterised in that** a phase pre-compensation is made on the frame modulation symbols in a first compensation module (210,810) and an amplitude pre-compensation is made on them in a second compensation module (220,820), before they are input to the segmentation module (230,830), the phase and amplitude pre-compensation being adapted to compensate for phase rotations and the attenuation applied to each sample of each cyclic sequence in the FBMC modulator (270,870).

2. Transmitter according to claim 1, **characterised in that** after concatenation with a cyclic prefix and a cyclic suffix (260), the cyclic temporal sequence thus obtained is modulated by an OQAM modulation by multiplication by a phase factor (265) before being input to an input channel of the FBMC modulator.

3. Transmitter according to claim 2, **characterised in that** the phase factor is given by $e^{j\phi_{k,n}}$ in which

$$\phi_{k,n} = \frac{\pi}{2}(n+k) - \pi nk$$

where $k$ is the rank of the modulation channel and $n$ is a temporal sample index in the cyclic sequence.

4. Transmitter according to claim 2 or 3, **characterised in that** each of said vectors is padded by inserting $N/2$ null elements at the beginning of each vector.

5. Transmitter according to claim 2 or 3, **characterised in that** each of said vectors is padded by inserting $N/2$ null elements at the end of each vector.

6. Transmitter according to claim 1, **characterised in that** said cyclic temporal sequence is supplied directly to said input channel of the FBMC modulator.

7. Transmitter according to claim 6, **characterised in that** said vectors are padded (840) by inserting $N/4$ null elements at the beginning and end of each vector, and then performing a circular offset of $N/2$ elements on each of the vectors thus padded, for even rank input channels ($k$).

8. Transmitter according to one of claims 1-7, **characterised in that** the phase pre-compensation is made by performing a Hadamard product of the modulation symbols matrix **D** and a matrix $\Omega$ with size $(NM/2) \times P$ for which the elements are phasors are defined as follows:

$$\Omega_{k\frac{N}{2}+p,t} = e^{j\pi k\alpha(t)}.e^{-j\frac{\pi}{2}(\alpha(t)+k)}.e^{j\theta(p)}$$

in which $\alpha(t) = N_{CP} + t(N + N_{CP} + N_{CS})$, $N_{CP}$ and $N_{CS}$ are the size of the cyclic prefix and the cyclic suffix respectively,

$$\theta(p) = \arg\left(\sum_{t=0}^{KM-1} g(t)e^{-j2\pi\frac{(p-\frac{N}{4})t}{MN/2}}\right)$$

in which $K$ is the coverage factor characteristic of the FBMC modulator and $g(t)$ is the impulse response of the prototype filter used in the FBMC modulator.

9. Transmitter according to one of the previous claims, **characterised in that** the amplitude pre-compensation is made by performing a Hadamard product of the modulation symbols matrix **D** and a matrix $\Gamma$ with size $(NM/2) \times P$ for which the elements are defined as follows:

$$\Gamma_{k\frac{N}{2}+p,t} = \left(\left|\sum_{t=0}^{KM-1} g(t)e^{-j2\pi\frac{(p-\frac{N}{4})t}{MN/2}}\right|\right)^{-1}$$

in which $K$ is the coverage factor characteristic of the FBMC modulator and $g(t)$ is the impulse response of the prototype filter used in the FBMC modulator.

10. Transmission/reception system comprising a transmitter according to any of the previous claims and a receiver; **characterised in that** the receiver also comprises a sampler to sample the signal received in base band, a module (285,885) to eliminate cyclic prefixes and suffixes, and an FFT module (290,890) to perform an FFT with size $NM$

/ 2 on the signal thus obtained every $(N + N_{GI})M / 2$ samples, in which $N_{GI}$ is the sum of the size of the cyclic prefix and the size of the cyclic suffix.

11. Transmission/reception system according to claim 10, **characterised in that** the modulation symbols frame comprises a plurality of pilot symbols and the receiver comprises a channel estimator (693) connected to the outputs from the FFT module to estimate channel coefficients for each sub-carrier, an equaliser (695) at the output from the FFT module to receive said channel coefficients and equalising outputs from the FFT module to make a sub-carrier equalisation.

12. Transmission/reception system according to claim 10, **characterised in that** the transmitter comprises a plurality of DFT modules (750) before the phase pre-compensation module (710) and the amplitude pre-compensation module (720), each DFT module receiving symbol blocks addressed to or sent by a user, the modulation symbols matrix being obtained from the outputs from said DFT modules, and the receiver comprises the same plurality of IDFT modules (797) downstream from the FFT module, each IDFT module of the receiver being associated with an DFT module of the transmitter and performing an IDFT with the same size as the FFT module at the output from the FFT module, to provide an estimate of said symbol blocks.

EP 3 300 325 B1

$e^{j\varphi_{1,n}}$

$e^{j\varphi_{2,n}}$

$e^{j\varphi_{M,n}}$

$e^{-j\varphi_{1,n}}$

$e^{-j\varphi_{2,n}}$

$e^{-j\varphi_{M,n}}$

padding

IFFT

CP

MOD FBMC $(M,K)$

DEMOD FBMC $(M,K)$

FFT

**Fig. 1**

**Fig. 2**

Fig. 3

$$N_{GI}\frac{M}{2} \qquad\qquad N_{GI}\frac{M}{2}$$

$$MN/2 \qquad\qquad MN/2 \qquad\qquad MN/2$$

FFT          FFT          FFT

$t$

$$\left(N+N_{GI}+2K-1\right)\frac{M}{2}$$

$$\left(2K-1\right)\frac{M}{2}$$

**Fig. 4**

EP 3 300 325 B1

**Fig. 5**

**Fig. 6**

Fig. 7

EP 3 300 325 B1

**Fig. 8**

**Fig. 9**

EP 3 300 325 B1

**Fig. 10**

EP 3 300 325 B1

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 3013928 A

**Littérature non-brevet citée dans la description**

• **B. HIROSAKI.** An orthogonally multiplexed QAM system using the discrete Fourier transform. *IEEE Trans on Comm.,* Juillet 1981, vol. 29 (7), 982-989
• **P. SIOHAN et al.** Analysis and design of OFDM/OQAM systems based on filterbank theory. *IEEE Trans. on signal processing,* vol. 50 (5), 1170-1183

• **R. ZAKARIA et al.** A novel filter-bank multicarrier scheme to mitigate the intrinsic interference : application to MIMO systems. *IEEE Trans. on Wireless Communications,* Mars 2012, vol. 11 (3), 1112-1123